# FASCICULE DE BREVET EUROPEEN

(11) **EP 3 458 878 B1**
(45) Date de publication et mention de la délivrance du brevet: **01.07.2020**
(21) Numéro de dépôt: 17723993.6
(22) Date de dépôt: 15.05.2017
(51) Int. Cl.: G01T 1/26, G01T 1/29

(54) **DETECTEUR DE PARTICULES REALISE DANS UN MATERIAU SEMI-CONDUCTEUR**
AUS EINEM HALBLEITERMATERIAL HERGESTELLTER PARTIKELDETEKTOR
PARTICLE DETECTOR MADE OF A SEMICONDUCTOR MATERIAL

(30) Priorité: 17.05.2016 FR 1654382
(43) Date de publication de la demande: 27.03.2019
(73) Titulaire: Université d'Aix Marseille, 13284 Marseille Cedex 07 (FR); Centre National de la Recherche Scientifique CNRS, 75794 Paris Cedex 16 (FR)
(72) Inventeur: VERVISCH, Wilfried Vivian Roland, 13680 Lancon-Provence (FR); OTTAVIANI, Laurent, 13004 Marseille (FR); BIONDO, Stéphane, 13190 Allauch (FR); HURTADO EP VERVISCH, Vanessa Laurence Jill, 13012 Marseille (FR)
(74) Mandataire: Cabinet Camus Lebkiri
(86) Numéro de dépôt international: PCT/EP2017/061637
(87) Numéro de publication internationale: WO 2017/198630

(56) Documents cités:
- EP-A1- 0 736 780
- EP-A1- 2 006 349
- EP-A2- 0 241 237
- US-A1- 2009 084 960

## Description

### DOMAINE TECHNIQUE DE L'INVENTION

Le domaine technique de l'invention est celui des détecteurs. Plus particulièrement, l'invention concerne un détecteur destiné à mesurer un faisceau de particules ou un environnement de particules.

### ARRIERE-PLAN TECHNOLOGIQUE DE L'INVENTION

Dans les expériences mettant en jeu un faisceau de particules et en particulier un faisceau de particules à hautes énergies, il est parfois nécessaire de mesurer précisément les propriétés du faisceau en minimisant au maximum l'influence de la mesure. Il est connu pour mesurer ces faisceaux d'avoir recours à des détecteurs de type Schottky ou PIN composés d'une première couche d'un matériau semi-conducteur dopé p, d'une deuxième couche d'un matériau semi-conducteur intrinsèque et d'une troisième couche d'un matériau semi-conducteur dopé n. Cette structure va donner naissance à une zone active principalement située dans la couche intrinsèque dans laquelle vont se créer des charges lors du passage du faisceau. Afin de pouvoir mesurer ces charges, il est connu de connecter une anode et une cathode de chaque côté de la structure PIN. De manière générale, ces détecteurs sont réalisés dans l'épaisseur d'une plaque de silicium et peuvent donc atteindre une épaisseur sensiblement égale à 300 µm. Ils absorbent donc une quantité non-négligeable de rayonnement. Cette absorption a pour première conséquence de perturber largement le faisceau lors de la mesure. En outre, les interactions rayonnement matière ayant lieu dans un volume important du matériau composant le détecteur, la dégradation des caractéristiques électriques et mécaniques de ce dernier peut être très rapide. Enfin des charges se créent en dehors de la zone active et diffuse jusque aux électrodes ajoutant du bruit au signal de mesure.

Pour résoudre en partie ce problème d'absorption, il est connu d'amincir la partie du détecteur que le faisceau est amené à traverser lors de la mesure. Cependant, afin de collecter les charges générées par le faisceau, la mise en place d'électrodes sur le trajet du faisceau reste indispensable. La présence de ces électrodes a deux conséquences. Tout d'abord les matériaux utilisés pour la fabrication de ces électrodes absorbent une quantité non-négligeable du faisceau. De plus, la structure du détecteur doit être comprise entièrement entre les électrodes. Or, comme cela a déjà été précisé, la zone active se concentre principalement dans la zone intrinsèque du matériau semi-conducteur. Autrement dit, une grande partie du matériau traversé par le faisceau ne contribue pas directement à la détection. Un dispositif de mesure d'un faisceau de particules selon la préambule de la revendication 1 est connu de EP 0 736 780 A1 (RIKAGAKU <ENKYUSHO [JP]; SUMITOMO ELECTRIC INDUSTRIES [JP]; ISHIKAWAJI) 9 octobre 1996 .

Il existe donc un besoin concernant un détecteur permettant de mesurer un faisceau de particules de hautes énergies tout en évitant une absorption excessive dudit faisceau par le détecteur et en limitant la formation de charges non-désirées dans les zones non-active.

### RESUME DE L'INVENTION

L'invention offre une solution aux problèmes évoqués précédemment en fournissant un dispositif de détection dans lequel le faisceau ne traverse que la zone utile du détecteur, la structure permettant la collecte des charges générées par le faisceau dans la zone active étant déportée de manière latérale par rapport au trajet du faisceau à mesurer.

Pour cela, l'invention propose un dispositif de mesure d'un faisceau de particules comprenant un première partie, dite partie centrale, une deuxième partie, dite partie périphérique, une face avant et une face arrière, la face avant étant parallèle à la face arrière. Plus particulièrement, le dispositif selon l'invention est tel que :
- la partie centrale comporte des moyens pour former une zone de charge d'espace destinée à être traversée par un faisceau de particules à mesurer, des porteurs de charge d'un premier type et d'un second type étant générés par ledit faisceau lorsque ce dernier traverse la zone de charge d'espace ;
- la partie périphérique comporte des moyens pour collecter au moins un type de porteur de charge parmi le premier type ou le deuxième type de porteurs de charge générés au niveau de la zone de charge d'espace.

De plus, la partie périphérique entoure la partie centrale de sorte qu'un faisceau de particule peut traverser la partie centrale sans traverser la partie périphérique, un orifice étant ménagé au niveau de la face arrière, dans une région de la partie centrale de sorte que l'épaisseur de ladite région de la partie centrale selon un axe normal à la face avant est inférieure à l'épaisseur de la partie périphérique selon ledit axe normal.

On entend notamment par faisceau de particules, un faisceau de neutrons ou un faisceau de rayons X. Autrement dit, la notion de particules doit être prise ici dans son sens large.

Ainsi, le faisceau de particules à mesurer ne traverse que la zone active du dispositif, c'est-à-dire, la zone d'espace de charge. La perturbation engendrée par le détecteur sur le faisceau est ainsi minimisée. En outre, le faisceau ne traversant pas la partie du dispositif par laquelle la collecte des charges est effectuée, le bruit de mesure s'en trouve fortement diminué. En effet, dans les dispositifs selon l'état de l'art antérieur, le faisceau traverse non seulement la partie active, mais également les zones du dispositif par lesquelles les charges générées par le faisceau sont collectées. Or, le faisceau peut également créer dans ces zones de collectes des charges non désirées. A la différence des charges créées dans la zone active qui sont entrainées par le champ électrique, les charges non désirées vont être entrainées par un phénomène de diffusion. Cette diffusion des charges non désirées va produire un signal parasite qui nuit à la précision de la mesure. Dans le détecteur selon l'invention le faisceau ne traverse pas les zones en charge de la collecte des porteurs, ces zones n'étant pas situées sur le parcours du faisceau. Le signal obtenu permet donc d'effectuer des mesures plus précises et moins bruité que les dispositifs selon l'état de l'art. En outre, la réduction des interactions à la seule zone active permet une diminution substantielle de la température du détecteur liée à ces dernières. De plus, la présence d'un orifice ménagé au niveau de la face arrière permet de s'assurer que l'épaisseur traversée par le faisceau est limité à l'épaisseur de la zone active tout en obtenant une bonne tenue mécanique par l'intermédiaire de la zone périphérique plus épaisse.

Outre les caractéristiques qui viennent d'être évoquées dans le paragraphe précédent, le dispositif selon un aspect de l'invention peut présenter une ou plusieurs caractéristiques complémentaires parmi les suivantes, considérées individuellement ou selon toutes les combinaisons techniquement possibles.

Avantageusement, la partie centrale est réalisée dans un matériau semi-conducteur à grand gap afin d'accepter des fortes doses de particules à hautes énergies. De manière préférentielle, le semi-conducteur est le carbure de silicium. On entend par grand gap un gap dont l'énergie est au moins deux fois supérieure à l'énergie du gap du silicium.

De manière préférentielle, la zone d'espace de charge est formée à l'aide d'une diode Schottky permettant une réponse rapide du recouvrement de comportement direct-inverse, une diode PN tirant alors avantage de l'effet tunnel ou une diode PIN permettant une bonne qualité de la tenue en tension.

Avantageusement, au moins une interface en regard de l'orifice aménagé dans la face arrière (ou avant) est structurée de sorte à favoriser l'absorption, la transmission ou la réflexion d'une ou plusieurs longueurs d'onde. On entend par interface une limite entre deux matériaux (ou deux couches). Il peut donc s'agir de la limite entre deux matériaux constitutifs (ou deux couches) du dispositif ou une limite entre le dispositif et son environnement (la surface du fond de l'orifice par exemple) ou la face avant. On entend par structurée le fait que l'interface présente des reliefs formant un motif (pyramide, pyramide tronquée, pavé, ...) dont les dimensions sont déterminées en fonction de la longueur d'onde dont on souhaite favoriser l'absorption, la structuration venant constituer un réseau de diffraction parfois appelé « cristal photonique ». On entend par favoriser l'absorption, la transmission ou la réflexion le fait que, pour un dispositif donné, le coefficient d'absorption, de transmission ou de réflexion de la longueur d'onde considérée avec la structuration est supérieur au coefficient d'absorption, de transmission ou de réflexion sans la structuration, toute chose étant égale par ailleurs. Ainsi, il est possible de favoriser l'absorption, la transmission ou la réflexion de la partie d'un faisceau associée à une longueur d'onde, plusieurs longueurs d'onde ou une ou plusieurs gammes de longueurs d'onde.

Avantageusement, dans un mode de réalisation alternatif ou complémentaire, des billes de métal sont présentes dans la partie centrale du dispositif de détection, de préférence en regard de l'orifice aménagé dans la face arrière, lesdites billes étant réparties selon une structure périodique de sorte à former un réseau plasmonique. Ainsi, tout comme avec les structurations évoquées précédemment, il est possible d'augmenter le coefficient d'absorption du matériau comportant lesdites billes (et donc du dispositif) pour une ou plusieurs longueurs d'onde choisies.

Avantageusement, la zone de charge d'espace de la partie centrale est uniquement située dans la région de la partie centrale en regard de l'orifice.

Ainsi, la zone active se limite à la zone effectivement traversée par le faisceau.

De manière alternative, la zone de charge d'espace de la partie centrale s'étend au-delà de la région de la partie centrale en regard de l'orifice.

Ainsi, il est possible de limiter la formation d'une structure MIS (Métal Isolant Semi-conducteur), en particulier lorsque la zone de charge d'espace est formée par une diode PN ou une diode PIN. On réduit ainsi les phénomènes capacitifs entre la couche dopée n et la couche métallique de l'anode.

Avantageusement, partie centrale comprend :
- une première couche d'un matériau semi-conducteur ;
- une deuxième couche d'un matériau conducteur recouvrant la première couche ;
la zone d'espace de charge étant formée par la diode Schottky formée par la première couche et la deuxième couche, l'orifice étant ménagé dans la première couche.

Ainsi, l'une des couches formant la diode Schottky étant métallique, il est possible de collecter un type de porteur de charge par cette même couche, ce qui supprime au moins une étape de dépôt et facilite la fabrication du dispositif comparativement à une zone d'espace de charge produit par une diode.

De manière préférentielle, la partie périphérique comprend :
- une troisième couche d'un matériau conducteur ;
- une première couche d'un matériau semi-conducteur recouvrant la troisième couche et disposée en continuité de la première couche de la partie centrale ;
- une deuxième couche d'un matériau conducteur recouvrant la première couche et disposée en continuité de la deuxième couche de la partie centrale ;
la troisième couche d'un matériau conducteur assurant la collecte d'un premier type de porteurs de charge générés dans la zone d'espace de charge.

Ainsi, la troisième couche d'un matériau permet de collecter un type de porteur de charge. En outre, cette couche n'étant située qu'au niveau de la partie périphérique, elle ne perturbe pas le faisceau.

Avantageusement, la partie centrale comprend :
- une première couche d'un matériau semi-conducteur dopé dans un premier type de dopage ;
- une deuxième couche d'un matériau semi-conducteur dopé dans un deuxième type de dopage opposé au premier type de dopage, ladite deuxième couche recouvrant la première couche ;
- une quatrième couche d'un matériau conducteur, ladite quatrième couche recouvrant la deuxième couche ;
la zone d'espace de charge étant formée par la diode PN formée par la première couche et la deuxième couche, l'orifice étant ménagé dans la première couche.

De préférence, la partie périphérique comprend :
- une troisième couche d'un matériau conducteur ;
- une première couche d'un matériau semi-conducteur dopé dans un premier type de dopage recouvrant la troisième couche et disposée en continuité de la première couche de la partie centrale, la première couche de la partie centrale et de la partie périphérique ayant le même niveau de dopage ;
- une deuxième couche d'un matériau semi-conducteur dopé dans un deuxième type de dopage opposé au premier type de dopage recouvrant la première couche, la dite deuxième couche étant disposée en continuité de la deuxième couche de la partie centrale, la deuxième couche de la partie centrale et de la partie périphérique ayant le même niveau de dopage ;
- une quatrième couche d'un matériau conducteur, ladite quatrième couche recouvrant la deuxième couche, la dite quatrième couche étant disposée en continuité de la quatrième couche de la partie centrale ;
la troisième couche d'un matériau conducteur assurant la collecte d'un premier type de porteurs de charge générés dans la zone d'espace de charge.

Ainsi, la troisième couche d'un matériau permet de collecter un type de porteur de charge. En outre, cette couche n'étant située qu'au niveau de la partie périphérique, elle ne perturbe pas le faisceau.

Avantageusement, la partie centrale comprend une cinquième couche d'un matériau conducteur recouvrant la deuxième couche et en ce que la partie périphérique comprend :
- une troisième couche d'un matériau conducteur ;
- une première couche d'un matériau semi-conducteur dopé dans un premier type de dopage recouvrant la troisième couche et disposée en continuité de la première couche de la partie centrale, la première couche de la partie centrale et de la partie périphérique ayant le même niveau de dopage ;
- une sixième couche d'un oxyde recouvrant la première couche ;
- une quatrième couche d'un matériau conducteur recouvrant la sixième couche ;
la quatrième couche formant une marche entre la partie périphérique et la partie centrale couvrant une surface latérale de la sixième couche de sorte à assurer une continuité entre la quatrième couche de la partie centrale et la quatrième couche de la partie périphérique.

Ainsi, la zone active se limite à la zone effectivement traversée par le faisceau, la collecte des charges depuis la zone active vers l'anode s'effectuant à l'aide de la huitième couche.

De manière préférentielle, la partie périphérique comporte une cinquième couche d'un matériau semi-conducteur dopé dans un premier type de dopage, le niveau de dopage de la cinquième couche étant plus élevé que le niveau de dopage de la première couche, la cinquième couche étant située entre la troisième couche et la première couche de la partie périphérique.

Ainsi on obtient une configuration de type PIN, la diode PIN formée entre la cinquième couche, la première couche et la deuxième couche permettant une meilleure collecte des charges générées par le faisceau de particules à détecter.

Avantageusement, le premier orifice est défini par une paroi latérale et par un fond et une couche d'un oxyde recouvre la paroi latérale et le fond du premier orifice. Ainsi, les liaisons pendantes issues de la fabrication du premier orifice sont neutralisées et les perturbations électriques que ces liaison pendantes sont susceptibles de générer sont éliminées.

Avantageusement, la section du premier orifice et/ou du deuxième orifice est de forme circulaire ou carré. Avantageusement, le premier orifice et le deuxième orifice sont positionnés au centre du dispositif. On entend ici par positionné au centre du dispositif le fait que lorsque l'on projette le dispositif et l'orifice sur une surface perpendiculaire à la direction de l'empilement, la projection de l'orifice sur cette surface est centrée relativement à la projection du dispositif.

Préférentiellement, dans la partie centrale, la quatrième couche ne recouvre qu'une partie seulement de la deuxième couche.

Ainsi, on limite l'absorption du faisceau par la quatrième couche tout en assurant une collecte des charges depuis la zone active vers l'anode.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention et illustrent :
- les figures 1A et 1B, une vue de dessus et en coupe d'un dispositif selon un mode de réalisation de l'invention ;
- la figure 2, une vue en coupe de la structure du dispositif selon un premier mode de réalisation ;
- la figure 3, une vue en coupe de la structure du dispositif selon un deuxième mode de réalisation ;
- la figure 4, une vue en coupe de la structure du dispositif selon un troisième mode de réalisation ;
- la figure 5, une vue en coupe de la structure du dispositif selon un quatrième mode de réalisation ;
- la figure 6, une vue en coupe de la structure du dispositif selon un cinquième mode de réalisation ;
- la figure 7, une vue en coupe de la structure du dispositif selon un sixième mode de réalisation ;
- la figure 8, une vue en coupe de la structure du dispositif selon un septième mode de réalisation ;
- la figure 9, une vue en coupe de la structure du dispositif selon un huitième mode de réalisation.

### DESCRIPTION DETAILLEE D'AU MOINS UN MODE DE REALISATION DE L'INVENTION

Sauf précision contraire, un même élément apparaissant sur des figures différentes présente une référence unique.

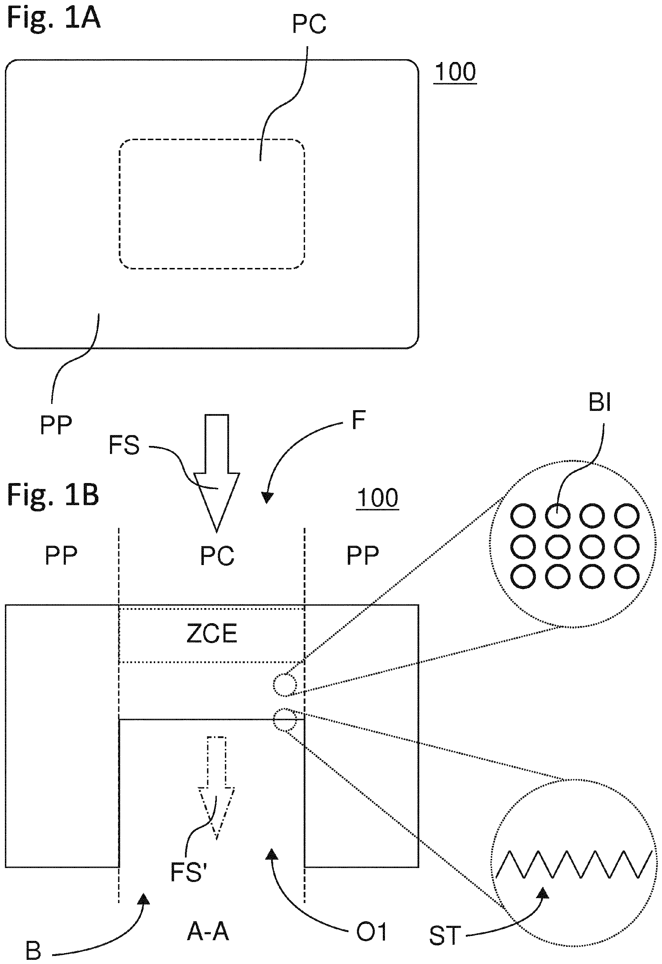

Un premier mode de réalisation de l'invention illustré aux figure 1A et 1B concerne un dispositif de mesure 100 d'un faisceau de particules FS comprenant un première partie, dite partie centrale PC, une deuxième partie, dite partie périphérique PP. La partie centrale PC comporte des moyens pour former une zone de charge d'espace ZCE (en pointillé sur l'ensemble des figures) destinée à être traversée par un faisceau de particules FS à mesurer, des porteurs de charge d'un premier type et d'un second type étant générés par ledit faisceau FS lorsque ce dernier traverse la zone de charge d'espace ZCE. En outre, la partie périphérique PP comporte des moyens pour collecter au moins un type de porteur de charge parmi le premier type ou le deuxième type de porteurs de charge générés au niveau de la zone de charge d'espace ZCE. De plus, la partie périphérique PP entoure la partie centrale PC de sorte qu'un faisceau de particule FS peut traverser la partie centrale PC sans traverser la partie périphérique PP.

Ainsi, le dispositif selon l'invention permet de mesurer un faisceau de particules FS en minimisant les perturbations engendrés par la mesure sur le faisceau de sortie FS'. Une telle configuration permet notamment de diminuer la quantité de rayonnement absorbé par le dispositif et donc le nombre d'interactions rayonnement matière susceptibles de venir perturber la mesure ou dégrader le dispositif de mesure.

De préférence, le dispositif de mesure 100 selon l'invention comporte une face avant F et une face arrière B, la face avant F étant parallèle à la face arrière B, et en ce qu'un orifice O1 est ménagé au niveau de la face arrière B, dans une région de la partie centrale PC de sorte que l'épaisseur de ladite région de la partie centrale PC selon un axe normal à la face avant F est inférieure à l'épaisseur de la partie périphérique PP selon ledit axe normal. L'orifice O1 peut être de forme circulaire, rectangulaire ou bien encore carré. Plus généralement, il peut prendre la forme d'un polygone quelconque. La taille de l'orifice O1 est déterminée par la taille du faisceau à mesurer. De préférence, la largeur du faisceau est inférieure à la largeur de l'orifice O1. La largeur de la région centrale peut donc varier du micron à une dizaine de centimètre. De préférence, la totalité de la partie centrale PC est en regard de l'orifice O1. Autrement dit, la surface de la partie centrale PC est égale à la surface d'une section de l'orifice O1.

Dans un mode de réalisation, au moins une interface en regard de l'orifice O1 aménagé dans la face arrière B est structurée de sorte à favoriser l'absorption, la transmission ou la réflexion d'une ou plusieurs longueurs d'onde. Ainsi, il est possible de favoriser l'absorption de la partie d'un faisceau FS associée à une longueur d'onde, plusieurs longueurs d'onde ou une ou plusieurs gammes de longueurs d'onde. Cela est notamment dû au fait que la structuration ST ainsi créée va favoriser la récolte de certains photons (dans le cas du rayonnement UV en particulier) et donc l'absorption du rayonnement dont la longueur d'onde correspond audits photons. Les dimensions des structurations sont en général du même ordre de grandeur que les dimensions de la longueur d'onde que l'on cherche à cibler, c'est-à-dire de l'ordre de quelques centaines de nanomètres, par exemple 200 à 300 nm. Ainsi, il est possible d'obtenir, pour une ou plusieurs longueurs d'ondes une plus forte absorption voire une réflexion, et notamment des taux absorption proches de 100%, par exemple 99.9%, pour une longueur d'onde choisie. Le dispositif 100 selon l'invention peut donc, en plus de la détection, contribuer à filtrer le faisceau FS incident. Il est donc possible d'obtenir un dispositif 100 de détection qui effectue la lecture de l'intensité du faisceau FS sur une longueur donnée pour laquelle le coefficient d'absorption est élevé, par exemple supérieur ou égale à 90 %, tout en absorbant peu une ou plusieurs autres longueur d'onde pour lesquelles le coefficient d'absorption est faible, par exemple inférieur ou égal à 10%. Plus de détails concernant les caractéristiques géométriques de la structuration en fonction de l'effet recherché (par exemple amélioration de l'absorption) pour une longueur d'onde donnée peuvent être trouvés dans l'article « Influence on electrical characteristics of the design of 4H-SiC ultraviolet photodetectors: Theoretical analysis and simulations » Journal of Applied Physics 111, 024506 (2012); doi: http://dx.doi.org/10.1063/1.3676284

Dans un mode de réalisation, des billes BI de métal, par exemple des billes BI d'or, d'aluminium, sont présentes dans le matériau de la partie centrale PC, de préférence en regard de l'orifice O1 aménagé dans la face arrière B. Les billes BI sont réparties selon une structure périodique de sorte à former un réseau plasmonique. Au passage du faisceau FS, des résonances électromagnétiques vont se produire au niveau de la structure périodique ainsi constituée rendant possible l'augmentation du coefficient d'absorption du matériau comportant lesdites billes BI (et donc du dispositif 100) pour une ou plusieurs longueurs d'onde choisies. Les longueurs d'onde affectée par la structure périodique sont fonction des paramètres géométriques de ladite structure, notamment la taille des billes BI et la distance entre les billes dans les trois dimensions de l'espace. Plus de détails concernant les caractéristiques géométriques de la structure périodique et le choix des métaux constituant les billes en fonction de l'effet recherché (par exemple amélioration de l'absorption) pour une longueur d'onde donnée peuvent être trouvés dans l'article "Intrinsic absorption of plasmonic structures for organic solar cells", Solar Energy Materials and Solar Cells, volume 95, S57-S64.

De préférence, la partie centrale PC est centrée par rapport à l'ensemble du dispositif 100. La partie centrale PC et/ou la partie périphérique PP du composant peuvent être réalisées, au moins en partie, dans un matériau semi-conducteur à grand gap, par exemple du carbure de silicium, du diamant ou un alliage semi-conducteur composé d'éléments de la colonne III-V ou II-VI. Par exemple, lorsque le semi-conducteur est du diamant, le dopage p peut être obtenu par implantation d'atomes de bore et le dopage n par implantation d'atomes de phosphore. Dans un deuxième exemple, lorsque le semi-conducteur est du carbure de silicium, le dopage p peut être par implantation d'atomes de bore et le dopage n par implantation d'atomes d'azote.

De préférence, la zone de charge d'espace ZCE de la partie centrale PC est uniquement située dans la région de la partie centrale PC en regard de l'orifice O1. De manière alternative, la zone de charge d'espace ZCE de la partie centrale PC s'étend au-delà de la région de la partie centrale PC en regard de l'orifice O1.

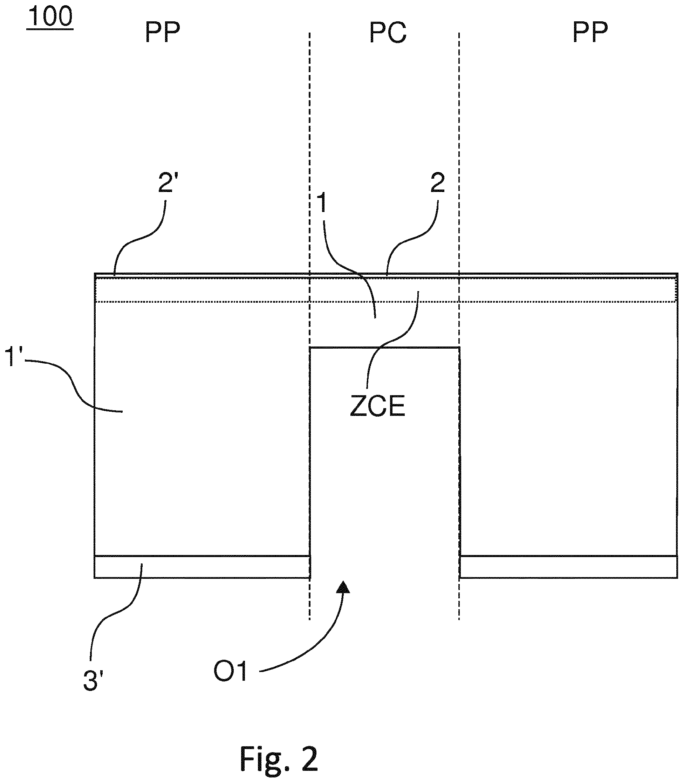

Dans un premier mode de réalisation illustré à la figure 2, la partie centrale PC comprend une première couche 1 d'un matériau semi-conducteur ; et une deuxième couche 2 d'un matériau conducteur recouvrant la première couche 1. Dans ce mode de réalisation, la zone d'espace de charge ZCE est formée par la diode Schottky formée par la première couche 1 et la deuxième couche 2, l'orifice O1 étant ménagé dans la première couche 1. L'orifice O1 ménagé dans la première couche 1 de la partie centrale PC peut être réalisée par une technique de gravure de type RIE.

De préférence, dans ce mode de réalisation, la partie périphérique PP comprend une troisième couche 3' d'un matériau conducteur ; une première couche 1' d'un matériau semi-conducteur recouvrant la troisième couche 3' et disposée en continuité de la première couche 1 de la partie centrale PC ; et une deuxième couche 2' d'un matériau conducteur recouvrant la première couche 1 et disposée en continuité de la deuxième couche 2 de la partie centrale PC.

Dans cette configuration, appelée configuration Schottky, la zone de charge d'espace ZCE est formée par la diode Schottky constituée par la première couche 1 d'un matériau conducteur et la deuxième couche 2 d'un matériau semi-conducteur. La zone de charge d'espace ZCE se situe donc sur la partie centrale PC mais également sur la partie périphérique PP. En outre, la troisième couche 3' d'un matériau conducteur assure la collecte d'un premier type de porteurs de charge générés dans la zone de charge d'espace de charge ZCE tandis que la première couche 2,2' réalisée dans un matériau conducteur, assure la collecte d'un deuxième type de porteurs de charge générés dans la zone de charge d'espace ZCE. La deuxième couche 2,2' et la troisième couche 3,3' peuvent être constituées par un métal tel que le cuivre, le zinc ou l'or ou bien encore par du graphène mono ou multicouches. On peut également utiliser du nickel, de l'aluminium, du titane ou du tungstène. De manière plus générale, tout matériau conducteur adapté aux conditions de fabrication ou d'opération du dispositif peut être choisi. Le matériau utilisé pour la deuxième couche 2,2' peut être différent du matériau utilisé pour la troisième couche 3,3'. De préférence, les matériaux utilisés pour la troisième couche 3' peuvent être choisis de sorte à obtenir un contact ohmique entre la troisième couche 3' et la première couche 1' de la partie périphérique PP.

De préférence, le niveau de dopage de la première couche 1 de la partie centrale PC est identique au niveau de dopage de la première couche 1' de la partie périphérique. Le procédé de fabrication s'en trouve facilité car il ne nécessite qu'un seul niveau de dopage.

De manière alternative, le niveau de dopage de la première couche 1 de la partie centrale PC est inférieur au niveau de dopage de la première couche 1' de la partie périphérique. Cette configuration permet de s'assurer une meilleure répartition du champ électrique et donc d'utiliser des tensions plus élevées pour la polarisation du détecteur.

Dans un exemple de réalisation, la première couche 1,1' a une épaisseur comprise entre 500 nm et 50 microns. Dans un mode de réalisation, la deuxième couche 2 ,2' a une épaisseur comprise entre 50nm et 200nm, de préférence sensiblement égale à 100nm.

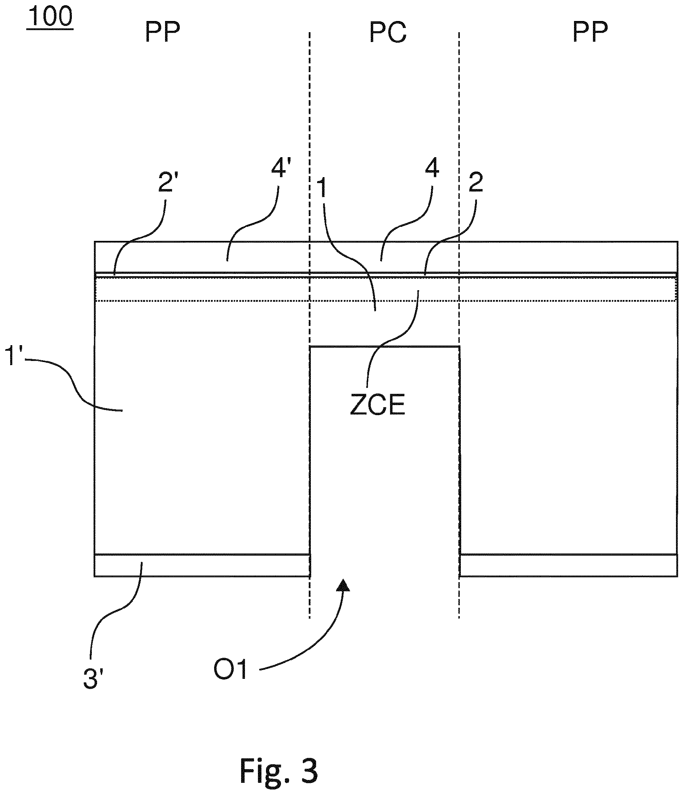

Dans un deuxième mode de réalisation d'un dispositif selon l'invention illustré à la figure 3, la partie centrale PC comprend une première couche 1 d'un matériau semi-conducteur dopé dans un premier type de dopage ; une deuxième couche 2 d'un matériau semi-conducteur dopé dans un deuxième type de dopage opposé au premier type de dopage, ladite deuxième couche 2 recouvrant la première couche 1 ; et une quatrième couche 4 d'un matériau conducteur, ladite quatrième couche 4 recouvrant la deuxième couche 2. Dans ce mode de réalisation, la zone d'espace de charge ZCE est formée par la diode PN formée par la première couche 1 et la deuxième couche 2, l'orifice O1 étant ménagé dans la première couche 1. L'orifice O1 ménagé dans la première couche 1 de la partie centrale PC peut être réalisée par une technique de gravure de type RIE.

De préférence, dans ce mode de réalisation, la partie périphérique PP comprend une troisième couche 3' d'un matériau conducteur ; une première couche 1' d'un matériau semi-conducteur dopé dans un premier type de dopage recouvrant la troisième couche 3' et disposée en continuité de la première couche 1 de la partie centrale PC ; une deuxième couche 2' d'un matériau semi-conducteur dopé dans un deuxième type de dopage opposé au premier type de dopage recouvrant la première couche 1', la dite deuxième couche 2' étant disposée en continuité de la deuxième couche 2 de la partie centrale PC ; et une quatrième couche 4' d'un matériau conducteur, ladite quatrième couche 4' recouvrant la deuxième couche 2', la dite quatrième couche 4' étant disposée en continuité de la quatrième couche 4 de la partie PC. Dans un mode de réalisation, le dopage de la première couche 1,1' est de type n et le dopage de la deuxième couche 2,2' est de type p.

Dans cette configuration, appelée configuration PN, la zone de charge d'espace ZCE est formée par la diode PN constituée par la première couche 1,1' d'un matériau semi-conducteur dopé dans un premier type de dopage et la deuxième couche 2,2' d'un matériau semi-conducteur dopé dans un deuxième type de dopage opposé au premier type de dopage. La zone d'espace de charge ZCE se situe donc sur la partie centrale PC mais également sur la partie périphérique PP. En outre, la troisième couche 3' de la partie périphérique assure la collecte d'un premier type de porteurs de charge générés dans la zone de charge d'espace ZCE tandis que la quatrième couche 4,4', réalisée dans un matériau conducteur, assure la collecte d'un deuxième type de porteurs de charge générés dans la zone de charge d'espace ZCE. La troisième couche 3' et la quatrième couche 4,4' peuvent être constituées par un métal tel que le cuivre, le zinc ou l'or ou bien encore par du graphène mono ou multicouches. On peut également utiliser du nickel, de l'aluminium, du titane ou du tungstène. De manière plus générale, tout matériau conducteur adapté aux conditions de fabrication ou d'opération du dispositif peut être choisi. Le matériau utilisé pour la troisième couche 3' peut être différent du matériau utilisé pour la quatrième couche 4,4'. De préférence, les matériaux utilisés pour la troisième couche 3' peuvent être choisis de sorte à obtenir un contact ohmique entre la troisième couche 3' et la première couche 1' de la partie périphérique PP. De même, les matériaux utilisés pour la quatrième couche 4,4' peuvent être choisis de sorte à obtenir un contact ohmique entre la quatrième couche 4,4' et la deuxième couche 2,2'.

De préférence, le niveau de dopage de la première couche 1 de la partie centrale PC est identique au niveau de dopage de la première couche 1' de la partie périphérique PP. De même, le niveau de dopage de la deuxième couche 2 de la partie centrale PC est identique au niveau de dopage de la deuxième couche 2' de la partie périphérique. Comme expliqué précédemment, le procédé de fabrication s'en trouve facilité car il ne nécessite qu'un seul niveau de dopage.

Dans un exemple de réalisation, le dopage de la première couche 1,1' est de type n et le dopage de la deuxième couche 2,2' est de type p. Le niveau de dopage de la première couche 1,1' est compris entre 5.10¹⁴ et 5.10¹⁹ atomes par cm³, de préférence sensiblement égal à 5.10¹⁵ atomes par cm³. Le niveau de dopage de la deuxième couche 2,2' est compris entre 1.10¹⁶ et 5.10¹⁹ atomes par cm³, de préférence sensiblement égal à 1.10¹⁹ atomes par cm³.

De manière alternative, le niveau de dopage de la première couche 1 de la partie centrale PC est inférieur au niveau de dopage de la première couche 1' de la partie périphérique. De même, le niveau de dopage de la deuxième couche 2 de la partie centrale PC est inférieur au niveau de dopage de la deuxième couche 2' de la partie périphérique. Comme expliqué précédemment, cette configuration permet de s'assurer d'une meilleure répartition du champ électrique, ce qui permet d'utiliser des tensions plus élevés pour la polarisation du détecteur.

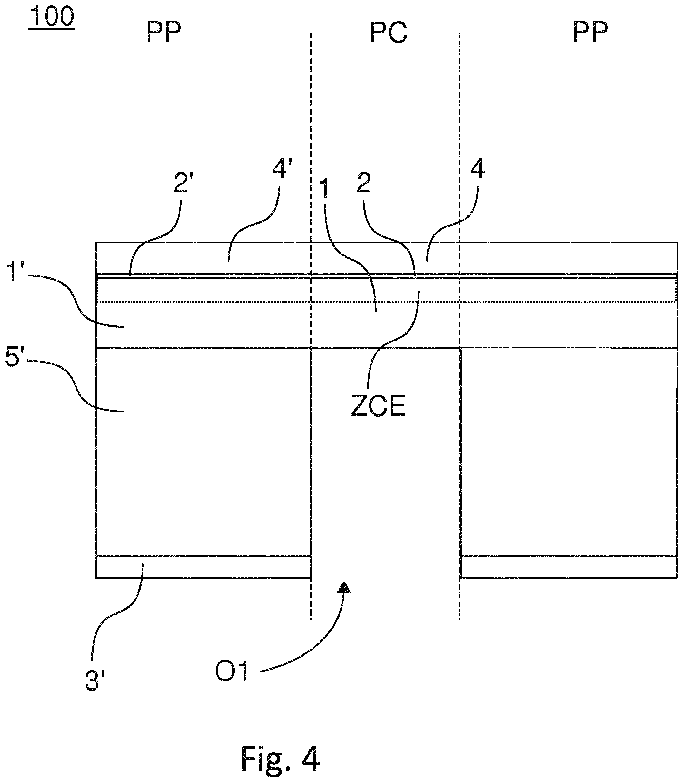

Dans un troisième mode de réalisation illustré à la figure 4, la partie périphérique PP comporte une cinquième couche 5' d'un matériau semi-conducteur dopé dans un premier type de dopage, le niveau de dopage de la cinquième couche 5' de la partie périphérique PP étant plus élevé que le niveau de dopage de la première couche 1' de la partie périphérique PP, la cinquième couche 5' étant située entre la troisième couche 3' et la première couche 1' de la partie périphérique PP. Ainsi dans cette configuration appelée configuration PIN, la diode PIN formée entre la cinquième couche 5' de la partie périphérique, la première couche 1,1' et la première couche 2,2' permet une meilleur récupération des charges générées dans la partie centrale PC par le faisceau FS de particules à détecter. La partie centrale PC du dispositif est de préférence identique à la partie centrale du dispositif selon le deuxième mode de réalisation.

La cinquième couche 5' de la partie périphérique PP peut par exemple être obtenu par la gravure de l'orifice O1 dans une couche d'un matériau semi-conducteur dopé dans un premier type de dopage ladite couche étant présente dans la partie centrale PC et la partie périphérique PP avant gravure et étant gravée dans toute son épaisseur afin de former l'orifice O1. La gravure peut être effectué par une technique sèche de type RIE ou bien encore une technique humide.

De préférence, le dopage de la première couche 1,1' et de la cinquième couche 5' de la partie périphérique PP est de type n et le dopage de la deuxième couche 2,2' est de type p. Le niveau de dopage de la cinquième couche 5' est compris entre 1.10¹⁶ et 1.10¹⁹ atomes par cm³, de préférence sensiblement égal à 110¹⁸ atomes par cm³. Le niveau de dopage de la première couche 1,1' est compris entre 5.10¹⁴ et 5.10¹⁹ atomes par cm³, de préférence sensiblement égal à 5.10¹⁵ atomes par cm³. Le niveau de dopage de la deuxième couche 2,2' est compris entre 1.10¹⁶ et 5.10¹⁹ atomes par cm³, de préférence sensiblement égal à 1.10¹⁹ atomes par cm³.

Dans un exemple de réalisation, la première couche 1,1' a une épaisseur comprise entre 500 nm et 50 microns ; la deuxième couche 2 ,2' a une épaisseur comprise entre 50 et 200nm, de préférence sensiblement égale à 100nm ; et la cinquième couche a une épaisseur comprise entre 250 et 350 microns, de préférence sensiblement égale à 300 micron.

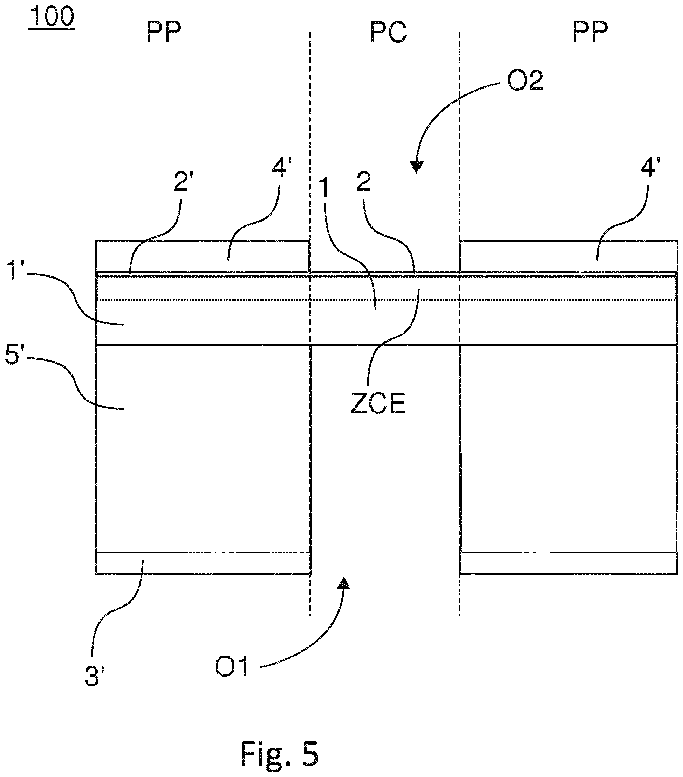

Le faisceau à mesurer ne traversant le détecteur qu'au niveau de la partie centrale PC, il peut être avantageux de déporter la totalité des électrodes nécessaires à la récupération des porteurs de charge au niveau de la partie périphérique. Pour cela, dans un quatrième mode de réalisation illustré à la figure 5, la partie centrale PC comprend une première couche 1 d'un matériau semi-conducteur dopé dans un premier type de dopage et une deuxième couche 2 d'un matériau semi-conducteur dopé dans un deuxième type de dopage opposé au premier type de dopage, ladite deuxième couche 2 recouvrant la première couche 1. La partie centrale est donc dépourvue dans ce mode de réalisation d'électrode. Dans ce mode de réalisation, la zone de charge d'espace est également produite par la diode PN constituée par la première couche 1,1' d'un matériau semi-conducteur dopé dans un premier type de dopage et la deuxième couche 2,2' d'un matériau semi-conducteur dopé dans un deuxième type de dopage opposé au premier type de dopage. En revanche, les porteurs de charges sont récupérés uniquement au niveau de la partie périphérique par les troisième couche 3' et quatrième couche 4' de la partie périphérique PP. Dans cette configuration, le faisceau ne traverse que la première couche 1 et la deuxième couche 2 de la partie centrale au niveau de laquelle se forme la zone d'espace de charge. Dans ce mode de réalisation, la quatrième couche 4' ne se trouve que sur la partie périphérique et forme donc un deuxième orifice 02.

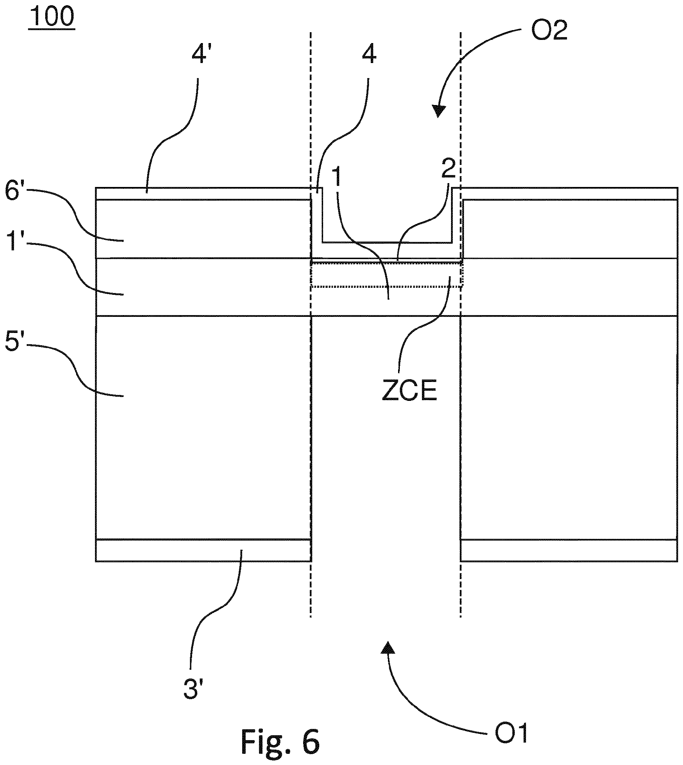

Dans le mode de réalisation précédent, la zone de charge d'espace ZCE est présente à la fois dans la partie centrale PC et la partie périphérique PP du dispositif. Cependant, il peut être avantageux de n'avoir une zone de charge d'espace ZCE que dans la partie centrale PC du dispositif de détection. Pour cela, dans un cinquième mode de réalisation illustré à la figure 6, la partie périphérique PP comprend une troisième couche 3' d'un matériau conducteur ; une première couche 1' d'un matériau semi-conducteur dopé dans un premier type de dopage recouvrant la troisième couche 3' et disposée en continuité de la première couche 1 de la partie centrale PC,; une sixième couche 6' d'un oxyde recouvrant la première couche 1'; et une quatrième couche 4' d'un matériau conducteur recouvrant la sixième couche 6'. Ainsi, la couche deuxième 2,2' n'étant présente que dans la partie centrale PC du dispositif, la zone de charge d'espace ZCE se trouve également restreinte à la partie centrale PC du dispositif 100.

Dans ce mode de réalisation, la quatrième couche 4, 4' forme une marche entre la partie périphérique PP et la partie centrale PC couvrant une surface latérale de la sixième couche 6 de sorte à assurer une continuité entre la quatrième couche 4 de la partie centrale PC et la quatrième couche 4' de la partie périphérique PP. Dans ce mode de réalisation, la sixième couche 6' ne se trouve que sur la partie périphérique et forme donc un deuxième orifice 02.

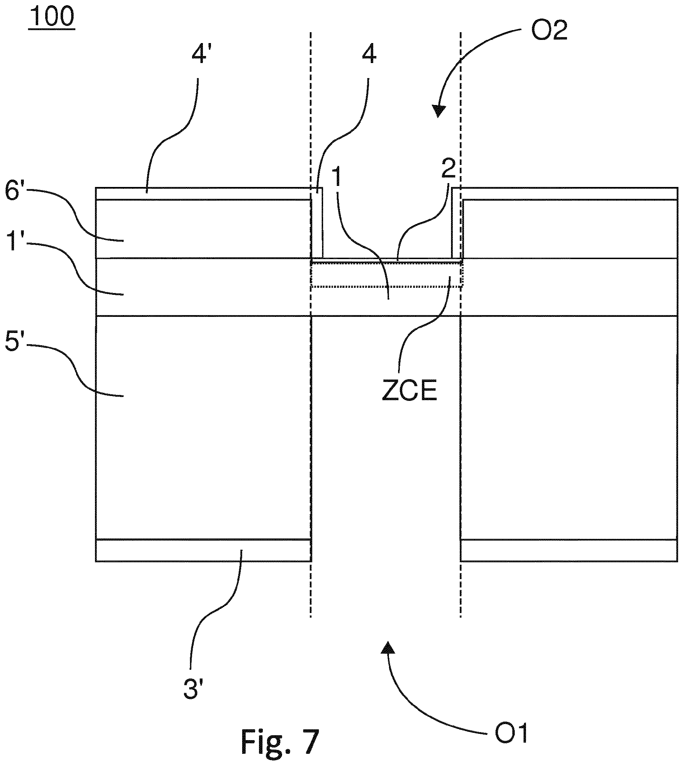

Cependant, dans le mode de réalisation précédent, la quatrième couche 4' de la partie centrale PC recouvre l'intégralité de la partie centrale PC par laquelle passe le faisceau à mesurer. Il peut être avantageux dans certaines situations de diminuer ce phénomène d'absorption. A cette fin, dans un sixième mode de réalisation illustré à la figure 7, la quatrième couche 4' de la partie centrale ne recouvre qu'une partie seulement de la partie centrale PC.

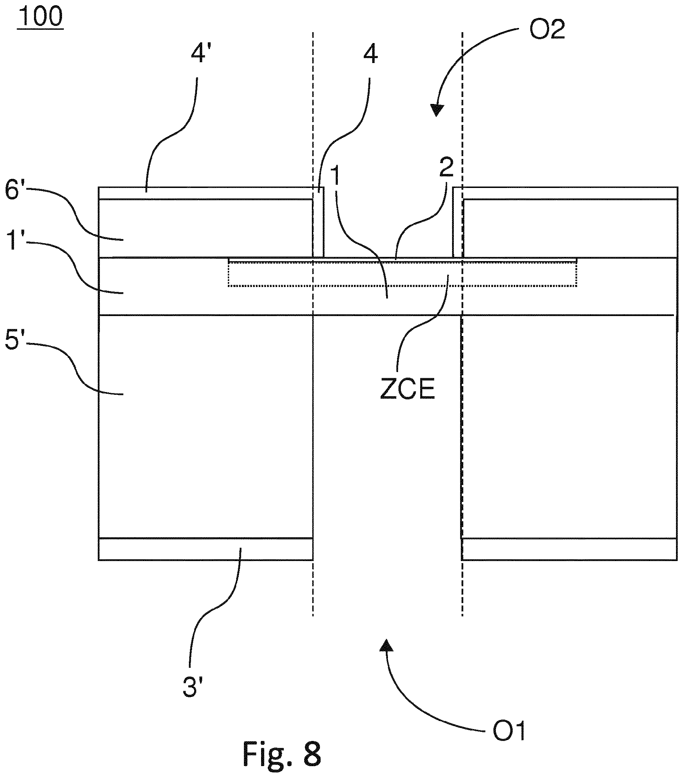

Par ailleurs, lorsque l'étendue de la deuxième couche 2,2' est limitée à la partie centrale PC, la structure MIS (Métal Isolant Semi-Conducteur) constituée au niveau de la partie périphérique PP du dispositif formé par la première couche de la partie périphérique 1', la sixième couche de la partie périphérique 6' et par la quatrième couche 4' de la partie périphérique peut venir perturber la mesure en induisant notamment des effets capacitifs. Afin de prévenir ce phénomène, dans un septième mode de réalisation illustré à la figure 8, la deuxième couche 2' de la partie périphérique ne couvre que partiellement la première couche 1' de la partie périphérique tout en assurant une continuité avec la deuxième couche 2 de la partie centrale PC. Autrement dit, la deuxième couche 2,2' est présente dans toute la partie centrale PC du dispositif ainsi que dans une zone de la partie périphérique PP. La présence de la deuxième couche 2' sur une zone plus étendue que la partie centrale PC limite la formation de la structure MIS précédemment évoquée. On réduit ainsi les phénomènes capacitifs entre la première couche de la partie périphérique 1', la sixième couche de la partie périphérique 6' et par la quatrième couche 4' de la partie périphérique.

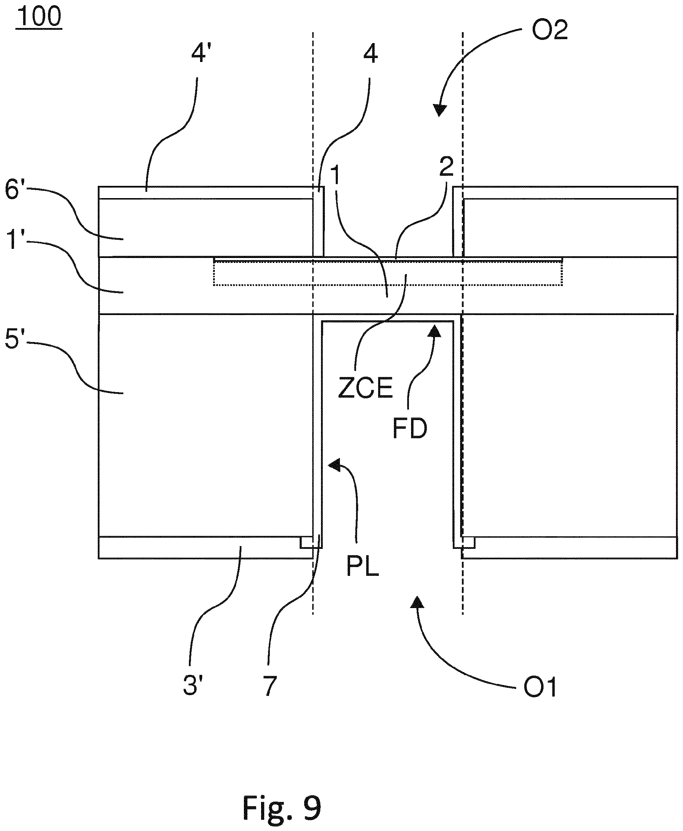

Dans un huitième mode de réalisation illustré à la figure 9, le premier orifice O1 est défini par une paroi latérale PL et par un fond FD et une couche d'un oxyde 7 recouvre la paroi latérale PL et le fond FD du premier orifice. En effet, comme cela a été évoqué précédemment, la partie de l'orifice O1 ménagée dans la cinquième 5,5' et/ou la première couche 1,1' peut être obtenue par une technique de gravure, par exemple par RIE. Cette méthode de fabrication présente l'inconvénient de produire des liaisons pendantes sur les surfaces laissées libres après la gravure. Ces liaisons pendantes peuvent altérer les propriétés électriques du matériau à proximité desdites surfaces libres. La présence de la couche d'oxyde 7 neutralise les liaisons pendantes issues de la fabrication de l'orifice O1 et élimine ainsi les perturbations électriques que ces liaisons pendantes sont susceptibles de générer. La couche d'oxyde 7 pourra être présente sur la totalité de la paroi latérale PL ou bien seulement sur la paroi latérale PL constituée par le matériau de la cinquième 5,5' et/ou la première couche 1,1', principalement concernée par le problème de liaisons pendantes.

## Revendications

1. Dispositif de mesure (100) d'un faisceau de particules comprenant une première partie, dite partie centrale (PC), une deuxième partie, dite partie périphérique (PP), une face avant (F) et une face arrière (B), la face avant (F) étant parallèle à la face arrière (B);
- la partie centrale (PC) comportant des moyens pour former une zone de charge d'espace (ZCE) destinée à être traversée par un faisceau de particules (FS) à mesurer, des porteurs de charge d'un premier type et d'un second type étant générés par ledit faisceau (FS) lorsque ce dernier traverse la zone de charge d'espace (ZCE) ;
- la partie périphérique (PP) comportant des moyens pour collecter au moins un type de porteur de charge parmi le premier type ou le deuxième type de porteurs de charge générés au niveau de la zone de charge d'espace (ZCE) ;
la partie périphérique (PP) entourant la partie centrale (PC) de sorte qu'un faisceau de particules (FS) peut traverser la partie centrale (PC) sans traverser la partie périphérique (PP), le dispositif de mesure étant caractérisé en un orifice (01) étant ménagé au niveau de la face arrière (B), dans une région de la partie centrale (PC) de sorte que l'épaisseur de ladite région de la partie centrale (PC) selon un axe normal à la face avant (F) est inférieure à l'épaisseur de la partie périphérique (PP) selon ledit axe normal.

2. Dispositif de mesure (100) selon la revendication précédente **caractérisé en ce qu'**au moins une interface en regard de l'orifice (O1) aménagé dans la face arrière (B) ou avant est structurée de sorte à favoriser l'absorption, la transmission ou la réflexion d'une ou plusieurs longueurs d'onde.

3. Dispositif de mesure (100) selon l'une des revendications précédente **caractérisé en ce que** des billes (BI) de métal sont présente dans la partie centrale (PC) ou selon l'optimisation de la récolte des porteurs de charge i.e. non loin de la ZCE souvent, lesdites billes (BI) étant réparties selon une structure périodique de sorte à former un réseau plasmonique.

4. Dispositif de mesure (100) selon l'un des revendications précédentes **caractérisé en ce que** la partie centrale (PC) est réalisée dans un matériau semi-conducteur à grand gap.

5. Dispositif de mesure (100) selon la revendication précédente **caractérisé en ce que** le semi-conducteur est le carbure de silicium.

6. Dispositif de mesure (100) selon l'une des revendications précédentes **caractérisé en ce que** la zone d'espace de charge (ZCE) est formée à l'aide d'une diode Schottky, une diode PN ou une diode PIN.

7. Dispositif de mesure (100) selon l'une des revendications précédentes **caractérisé en ce que** la zone de charge d'espace (ZCE) de la partie centrale (PC) est uniquement située dans la région de la partie centrale (PC) en regard de l'orifice (01).

8. Dispositif de mesure (100) selon l'une des revendications 1 à 4 **caractérisé en ce que** la zone de charge d'espace (ZCE) de la partie centrale (PC) s'étend au-delà de la région de la partie centrale (PC) en regard de l'orifice (O1).

9. Dispositif de mesure (100) selon l'une des revendications 1 à 4 **caractérisé en ce que** la partie centrale (PC) comprend :
- une première couche (1) d'un matériau semi-conducteur ;
- une deuxième couche (2) d'un matériau conducteur recouvrant la première couche (1) ;
la zone d'espace de charge (ZCE) étant formée par la diode Schottky formée par la première couche (1) et la deuxième couche (2), l'orifice (O1) étant ménagé dans la première couche (1).

10. Dispositif de mesure (100) selon la revendication précédente **caractérisé en ce que** la partie périphérique (PP) comprend :
- une troisième couche (3') d'un matériau conducteur ;
- une première couche (1') d'un matériau semi-conducteur recouvrant la troisième couche (3') et disposée en continuité de la première couche (1) de la partie centrale (PC) ;
- une deuxième couche (2') d'un matériau conducteur recouvrant la première couche (1) et disposée en continuité de la deuxième couche (2) de la partie centrale (PC) ;
la troisième couche (3') d'un matériau conducteur assurant la collecte d'un premier type de porteurs de charge générés dans la zone d'espace de charge (ZCE).

11. Dispositif de mesure (100) selon l'une des revendications 1 à 4 **caractérisé en ce que** la partie centrale (PC) comprend :
- une première couche (1) d'un matériau semi-conducteur dopé dans un premier type de dopage ;
- une deuxième couche (2) d'un matériau semi-conducteur dopé dans un deuxième type de dopage opposé au premier type de dopage, ladite deuxième couche (2) recouvrant la première couche (1) ;
- une quatrième couche (4) d'un matériau conducteur, ladite quatrième couche (4) recouvrant la deuxième couche (2) ;
la zone d'espace de charge (ZCE) étant formée par la diode PN formée par la première couche (1) et la deuxième couche (2), l'orifice (O1) étant ménagé dans la première couche (1).

12. Dispositif de mesure (100) selon la revendication précédente **caractérisé en ce que** la partie périphérique comprend :
- une troisième couche (3') d'un matériau conducteur ;
- une première couche (1') d'un matériau semi-conducteur dopé dans un premier type de dopage recouvrant la troisième couche (3') et disposée en continuité de la première couche (1) de la partie centrale (PC) ;
- une deuxième couche (2') d'un matériau semi-conducteur dopé dans un deuxième type de dopage opposé au premier type de dopage recouvrant la première couche (1'), ladite deuxième couche (2') étant disposée en continuité de la deuxième couche (2) de la partie centrale (PC) ;
- une quatrième couche (4') d'un matériau conducteur, ladite quatrième couche (4') recouvrant la deuxième couche (2'), ladite quatrième couche (4') étant disposée en continuité de la quatrième couche (4) de la partie centrale (PC) ;
la troisième couche (3) d'un matériau conducteur assurant la collecte d'un premier type de porteurs de charge générés dans la zone d'espace de charge (ZCE).

13. Dispositif de mesure (100) selon la revendication 9 **caractérisé en ce que** la partie périphérique (PP) comprend :
- une troisième couche (3') d'un matériau conducteur ;
- une première couche (1') d'un matériau semi-conducteur dopé dans un premier type de dopage recouvrant la troisième couche (3') et disposée en continuité de la première couche (1) de la partie centrale (PC), la première couche (1) de la partie centrale (PC) et de la partie périphérique (PP) ayant le même niveau de dopage ;
- une sixième couche (6) d'un oxyde recouvrant la première couche (1) ;
- une quatrième couche (4') d'un matériau conducteur recouvrant la sixième couche (6) ;
la quatrième couche (4, 4') formant une marche entre la partie périphérique (PP) et la partie centrale (PC) couvrant une surface latérale de la sixième couche (6) de sorte à assurer une continuité entre la quatrième couche (4) de la partie centrale (PC) et la quatrième couche (4') de la partie périphérique (PP).

14. Dispositif selon l'une des deux revendications précédentes **caractérisé en ce que** la partie périphérique (PP) comporte une cinquième couche (5') d'un matériau semi-conducteur dopé dans un premier type de dopage, le niveau de dopage de la cinquième couche (5') étant plus élevé que le niveau de dopage de la première couche (1'), la quatrième couche étant située entre la troisième couche (3') et la première couche (1') de la partie périphérique (PP).

## Patentansprüche

1. Messvorrichtung (100) eines Partikelstrahls, umfassend einen ersten Teil, bezeichnet als zentraler Teil (PC), einen zweiten Teil, bezeichnet als umlaufender Teil (PP), eine vordere Seite (F) und eine hintere Seite (B), wobei die vordere Seite (F) parallel zur hinteren Seite (B) ist;
- wobei der zentrale Teil (PC) Mittel zum Formen einer Raumchargen-Zone (ZCE) umfasst, die dazu bestimmt ist, von einem zu messenden Partikelstrahl (FS) durchquert zu sein, wobei Chargenträger eines ersten Typs und eines zweiten Typs von dem genannten Strahl (FS) erzeugt sind, wenn Letzterer die Raumchargen-Zone (ZCE) durchquert;
- wobei der umlaufende Teil (PP) Mittel zum Erfassen wenigstens eines Chargenträgertyps aus dem ersten Typ oder dem zweiten Typ des Chargenträgers umfasst, die an der Raumchargen-Zone (ZCE) erzeugt sind;
wobei der umlaufende Teil (PP) den zentralen Teil (PC) derart umgibt, dass ein Partikelstrahl (FS) den zentralen Teil (PC) ohne Durchqueren des umlaufenden Teils (PP) durchqueren kann, wobei die Messvorrichtung **dadurch gekennzeichnet ist, dass** eine Öffnung (O1) an der hinteren Seite (B) in einer Region des zentralen Teils (PC) derart angeordnet ist, dass die Dicke der genannten Region des zentralen Teils (PC) gemäß einer normalen Achse an der vorderen Seite (F) geringer ist als die Dicke des umlaufenden Teils (PP) gemäß der genannten normalen Achse.

2. Messvorrichtung (100) gemäß dem voranstehenden Anspruch, **dadurch gekennzeichnet, dass** wenigstens eine Schnittstelle gegenüber der Öffnung (O1), die in der hinteren (B) oder der vorderen Seite derart strukturiert ist, dass die Absorption, die Übertragung oder das Reflektieren einer oder mehrerer Wellenlänge(n) begünstigt ist.

3. Messvorrichtung (100) gemäß einem der voranstehenden Ansprüche, **dadurch gekennzeichnet, dass** Metallkugeln (BI) in dem zentralen Teil (PC) oder gemäß der Optimierung der Ernte der Chargenträger, d. h. häufig nicht weit von der ZCE vorhanden ist, wobei die genannten Kugeln (BI) gemäß einer periodischen Struktur derart verteilt sind, dass ein plasmonisches Netz geformt ist.

4. Messvorrichtung (100) gemäß einem der voranstehenden Ansprüche, **dadurch gekennzeichnet, dass** der zentrale Teil (PC) aus einem Halbleitermaterial mit großem Gap realisiert ist.

5. Messvorrichtung (100) gemäß dem voranstehenden Anspruch, **dadurch gekennzeichnet, dass** der Halbleiter das Siliziumkarbid ist.

6. Messvorrichtung (100) gemäß einem der voranstehenden Ansprüche, **dadurch gekennzeichnet, dass** die Chargenraum-Zone (ZCE) mithilfe einer Schottky-Diode, einer PN-Diode oder einer PIN-Diode geformt ist.

7. Messvorrichtung (100) gemäß einem der voranstehenden Ansprüche, **dadurch gekennzeichnet, dass** die Raumchargen-Zone (ZCE) des zentralen Teils (PC) ausschließlich in der Region des zentralen Teils (PC) gegenüber der Öffnung (O1) angeordnet ist.

8. Messvorrichtung (100) gemäß einem der Ansprüche 1 bis 4, **dadurch gekennzeichnet, dass** die Raumchargen-Zone (ZCE) des zentralen Teils (PC) sich über die Region des zentralen Teils (PC) gegenüber der Öffnung (O1) hinweg erstreckt.

9. Messvorrichtung (100) gemäß einem der Ansprüche 1 bis 4, **dadurch gekennzeichnet, dass** der zentrale Teil (PC) umfasst:
- eine erste Schicht (1) eines Halbleiter-Materials;
- eine zweite Schicht (2) eines leitenden Materials, die die erste Schicht (1) überdeckt;
wobei die Chargenraum-Zone (ZCE) von der Schottky-Diode geformt ist, die von der ersten Schicht (1) und der zweiten Schicht (2) geformt ist, wobei die Öffnung (O1) in der ersten Schicht (1) ausgespart ist.

10. Messvorrichtung (100) gemäß dem voranstehenden Anspruch, **dadurch gekennzeichnet, dass** der umlaufende Teil (PP) umfasst:
- eine dritte Schicht (3') eines leitenden Materials;
- eine erste Schicht (1') eines Halbleitermaterials, die die dritte Schicht (3') abdeckt und in Fortsetzung der ersten Schicht (1) des zentralen Teils (PC) angeordnet ist;
- eine zweite Schicht (2') eines leitenden Materials, die die erste Schicht (1) abdeckt und in Fortsetzung der zweiten Schicht (2) des zentralen Teils (PC) angeordnet ist;
wobei die dritte Schicht (3') eines leitenden Materials das Erfassen eines ersten Typs von Chargenträgern gewährleistet, die in der Chargenraum-Zone (ZCE) erzeugt sind.

11. Messvorrichtung (100) gemäß einem der Ansprüche 1 bis 4, **dadurch gekennzeichnet, dass** der zentrale Teil (PC) umfasst:
- eine erste Schicht (1) eines gedopten Halbleiter-Materials in einem ersten Dopingtyp;
- eine zweite Schicht (2) eines gedopten Halbleitermaterials in einem zweiten Dopingtyp, der dem ersten Dopingtyp entgegengesetzt ist, wobei die genannte zweite Schicht (2) die erste Schicht (1) abdeckt;
- eine vierte Schicht (4) eines leitenden Materials, wobei die genannte vierte Schicht (4) die zweite Schicht (2) abdeckt;
wobei die Chargenraum-Zone (ZCE) durch die PN-Diode geformt ist, die von der ersten Schicht (1) und der zweiten Schicht (2) geformt ist, wobei die Öffnung (O1) in der ersten Schicht (1) ausgespart ist.

12. Messvorrichtung (100) gemäß dem voranstehenden Anspruch, **dadurch gekennzeichnet, dass** der umlaufende Teil umfasst:
- eine dritte Schicht (3') aus einem leitenden Material;
- eine erste Schicht (1') aus einem gedopten Halbleiter-Material aus einem ersten Dopingtyp, die die dritte Schicht (3') abdeckt und in Fortführung der ersten Schicht (1) des zentralen Teils (PC) angeordnet ist;
- eine zweite Schicht (2') eines gedopten Halbleitermaterials aus einem zweiten Dopingtyp, der dem ersten Dopingtyp entgegengesetzt ist, der die erste Schicht (1') abdeckt, wobei die genannte zweite Schicht (2') in Fortführung der zweiten Schicht (2) des zentralen Teils (PC) angeordnet ist;
- eine vierte Schicht (4') eines leitenden Materials, wobei die genannte vierte Schicht (4') die zweite Schicht (2') abdeckt, wobei die genannte vierte Schicht (4') in Fortführung der vierten Schicht (4) des zentralen Teils (PC) angeordnet ist;
wobei die dritte Schicht (3) eines leitenden Materials das Erfassen eines ersten Typs von Chargenträgern, die in der Chargenraum-Zone (ZCE) erzeugt sind, gewährleistet.

13. Messvorrichtung (100) gemäß Anspruch 9, **dadurch gekennzeichnet, dass** der umlaufende Teil (PP) umfasst:
- eine dritte Schicht (3') eines leitenden Materials;
- eine erste Schicht (1') eines gedopten Halbleiter-Materials aus einem ersten Dopingtyp, der die dritte Schicht (3') abdeckt und in Fortführung der ersten Schicht (1) des ersten zentralen Teils (PC) angeordnet ist, wobei die erste Schicht (1) des zentralen Teils (PC) und des umlaufenden Teils (PP) dasselbe Dopingniveau aufweist;
- eine sechste Schicht (6) eines Sauerstoffs, die die erste Schicht (1) abdeckt;
- eine vierte Schicht (4') eines leitenden Materials, die die sechste Schicht (6) abdeckt;
wobei die vierte Schicht (4, 4') eine Stufe zwischen dem umlaufenden Teil (PP) und dem zentralen Teil (PC) formt, die eine seitliche Oberfläche der sechsten Schicht (6) derart bildet, dass eine Fortführung zwischen der vierten Schicht (4) des zentralen Teils (PC) und der vierten Schicht (4') des umlaufenden Teils (PP) gebildet ist.

14. Vorrichtung gemäß einem der zwei voranstehenden Ansprüche, **dadurch gekennzeichnet, dass** der umlaufende Teil (PP) eine fünfte Schicht (5') eines gedopten Halbleiter-Materials aus einem ersten Dopingtyp umfasst, wobei das Dopingniveau der fünften Schicht (5') höher ist als das Dopingniveau der ersten Schicht (1'), wobei die vierte Schicht zwischen der dritten Schicht (3') und der ersten Schicht (1') des umlaufenden Teils (PP) angeordnet ist.

## Claims

1. Device (100) for measuring a particle beam including a first part, designated central part (PC), a second part, designated peripheral part (PP), a front face (F) and a rear face (B), the front face (F) being parallel to the rear face (B);
- the central part (PC) comprising means for forming a space charge zone (ZCE) intended to be traversed by a particle beam (FS) to measure, charge carriers of a first type and of a second type being generated by said beam (FS) when the latter traverses the space charge zone (ZCE);
- the peripheral part (PP) comprising means for collecting at least one type of charge carrier among the first type or the second type of charge carriers generated at the level of the space charge zone (ZCE);
the peripheral part (PP) surrounding the central part (PC) such that a particle beam (FS) can traverse the central part (PC) without traversing the peripheral part (PP), the device for measuring being **characterized in that** it comprises an orifice (O1) being arranged at the level of the rear face (B), in a region of the central part (PC) such that the thickness of said region of the central part (PC) along an axis normal to the front face (F) is less than the thickness of the peripheral part (PP) along said normal axis.

2. Measuring device (100) according to the preceding claim **characterised in that** at least one interface facing the orifice (O1) arranged in the rear (B) or front face is structured so as to favour the absorption, the transmission or the reflection of one or several wavelengths.

3. Measuring device (100) according to one of the preceding claims **characterised in that** metal beads (BI) are present in the central part (PC), said beads (BI) being spread out according to a periodic structure so as to form a plasmonic array.

4. Measuring device (100) according to one of the preceding claims **characterised in that** the central part (PC) is made of a wide gap semiconductor material.

5. Measuring device (100) according to the preceding claim **characterised in that** the semiconductor is silicon carbide.

6. Measuring device (100) according to one of the preceding claims **characterised in that** the space charge zone (ZCE) is formed by means of a Schottky diode, a PN diode or a PIN diode.

7. Measuring device (100) according to one of the preceding claims **characterised in that** the space charge zone (ZCE) of the central part (PC) is uniquely situated in the region of the central part (PC) facing the orifice (O1).

8. Measuring device (100) according to one of claims 1 to 4 **characterised in that** the space charge zone (ZCE) of the central part (PC) extends beyond the region of the central part (PC) facing the orifice (O1).

9. Measuring device (100) according to one of claims 1 to 4 **characterised in that** the central part (PC) includes:
- a first layer (1) of a semiconductor material;
- a second layer (2) of a conductor material covering the first layer (1);
the space charge zone (ZCE) being formed by the Schottky diode formed by the first layer (1) and the second layer (2), the orifice (O1) being arranged in the first layer (1).

10. Measuring device (100) according to the preceding claim **characterised in that** the peripheral part (PP) includes:
- a third layer (3') of a conductor material;
- a first layer (1') of a semiconductor material covering the third layer (3') and arranged in continuity with the first layer (1) of the central part (PC);
- a second layer (2') of a conductor material covering the first layer (1) and arranged in continuity with the second layer (2) of the central part (PC);
the third layer (3') of a conductor material ensuring the collection of a first type of charge carrier generated in the space charge zone (ZCE).

11. Measuring device (100) according to one of claims 1 to 4 **characterised in that** the central part (PC) includes:
- a first layer (1) of a semiconductor material doped with a first type of doping;
- a second layer (2) of a semiconductor material doped with a second type of doping opposite to the first type of doping, said second layer (2) covering the first layer (1);
- a fourth layer (4) of a conductor material, said fourth layer (4) covering the second layer (2);
the space charge zone (ZCE) being formed by the PN diode formed by the first layer (1) and the second layer (2), the orifice (O1) being arranged in the first layer (1).

12. Measuring device (100) according to the preceding claim **characterised in that** the peripheral part includes:
- a third layer (3') of a conductor material;
- a first layer (1') of a semiconductor material doped with a first type of doping covering the third layer (3') and arranged in continuity with the first layer (1) of the central part (PC);
- a second layer (2') of a semiconductor material doped with a second type of doping opposite to the first type of doping covering the first layer (1'), said second layer (2') being arranged in continuity with the second layer (2) of the central part (PC);
- a fourth layer (4') of a conductor material, said fourth layer (4') covering the second layer (2'), said fourth layer (4') being arranged in continuity with the fourth layer (4) of the central part (PC);
the third layer (3) of a conductor material ensuring the collection of a first type of charge carrier generated in the space charge zone (ZCE).

13. Measuring device (100) according to claim 9 **characterised in that** the peripheral part (PP) includes:
- a third layer (3') of a conductor material;
- a first layer (1') of a semiconductor material doped with a first type of doping covering the third layer (3') and arranged in continuity with the first layer (1) of the central part (PC), the first layer (1) of the central part (PC) and of the peripheral part (PP) having the same doping level;
- a sixth layer (6) of an oxide covering the first layer (1):
- a fourth layer (4') of a conductor material covering the sixth layer (6);
the fourth layer (4, 4') forming a step between the peripheral part (PP) and the central part (PC) covering a lateral surface of the sixth layer (6) so as to ensure continuity between the fourth layer (4) of the central part (PC) and the fourth layer (4') of the peripheral part (PP).

14. Device according to one of the two preceding claims **characterised in that** the peripheral part (PP) comprises a fifth layer (5') of a semiconductor material doped with a first type of doping, the doping level of the fifth layer (5') being higher than the doping level of the first layer (1'), the fourth layer being situated between the third layer (3') and the first layer (1') of the peripheral part (PP).
